Europäisches Patentamt

European Patent Office

Office européen des brevets

(11) Veröffentlichungsnummer: **0 383 955 B1**

## (12) EUROPÄISCHE PATENTSCHRIFT

(45) Veröffentlichungstag der Patentschrift: **30.09.92**

(21) Anmeldenummer: **86110507.0**

(22) Anmeldetag: **30.07.86**

(51) Int. Cl.⁵: **B60N 2/00**

---

54 **Sitz für öffentliche Verkehrsmittel.**

---

(30) Priorität: **30.10.85 DE 3538595**

(43) Veröffentlichungstag der Anmeldung:
**29.08.90 Patentblatt 90/35**

(45) Bekanntmachung des Hinweises auf die
Patenterteilung:
**30.09.92 Patentblatt 92/40**

(84) Benannte Vertragsstaaten:
**AT BE CH FR GB IT LI LU NL SE**

(56) Entgegenhaltungen:
EP-A- 0 107 882    DE-A- 1 942 625
DE-C- 813 636    FR-A- 1 593 281
FR-A- 2 326 164    GB-A- 373 479
US-A- 2 834 402

(73) Patentinhaber: **Paulisch KG**
**Eisenbahnstrasse 17**
**W-8770 Lohr am M.(DE)**

(72) Erfinder: **Mankiewicz,Dieter**
**Hirschweg 1**
**W-8770 Lohr a.M.(DE)**

(74) Vertreter: **Eyer, Eckhardt Philipp, Dipl.-Ing. et al**
**Patentanwälte Eyer & Linser Robert-Bosch-Strasse 12a**
**W-6072 Dreieich(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Sitz für öffentliche Verkehrsmittel, bestehend aus einem gemeinsam das Sitzteil und das Rückenteil umfassenden, an einem Sitzgestell befestigten starren Polsterrahmen, der um eine sich etwa in Höhe eines Drittels von der Vorderkante des Sitzteils quer erstreckenden Achse schwenkbar und mittels einer am Polsterrahmen angreifenden Gasfeder abgestützt ist.

Bei einem bekannten Sitz dieser Art ist der Sitz mit seinem Polsterrahmen unmittelbar gelenkig an dem Sitzgstell angeordnet, wobei die Gasfeder an einer Seitenwange des Sitzgestell einerseits und an dem Polsterrahmen etwa in Höhe eines Drittels von der hinteren Kante des Sitzteils andererseits angelenkt ist. Die bekannten Fahrzeugsitze haben sich funktionell bestens bewährt, es werden jedoch in jüngerer Zeit die weit in das Fußgestell einragenden Gasfedern als Stützelemente zunehmend als störend angesehen, da sie einerseits die Unterbringung anderer im Fahrbetrieb benötigter Aggregate und insbesondere den ungehinderten Zugang zu den unter dem Sitz gelegenen Bodenflächen zum Zwecke der Reinigung behindern. Die Forderung lautet daher heute auf eine - abgesehen von dem Sitzgestell selbst - absolut freie Sitzhöhe von mindestens 250 mm, die mit den bekannten Sitzen nicht erzielt werden kann.

Der vorliegenden Erfindung liegt daher als Aufgabe die Schaffung eines Fahrzeugsitzes der beschriebenen Art zugrunde, der bei Erhaltung einwandfreier Federungseigenschaften und Freiheit der Sitzverstellung eine verringerte Bauhöhe besitzt. Die Erfindung besteht darin, daß der Polsterrahmen an einem an dem Sitzgestell befestigten Sitzrahmen angelenkt ist und sich die Gasfeder zwischen dem Sitzrahmen und dem Rückenteil des Polsterrahmens erstreckt, wobei mindestens eine sich zwischen der Sitzrahmen und dem Polsterrahmen erstreckende Druckfeder vorgesehen ist, die auf den Polsterrahmen bei Entlastung der Gasfeder eine vertikale Stützkraft ausübt, die dem Gewicht des Sitzes, zuzüglich dem durch die Personbelastung auf den Polsterrahmen ausgeübten Moment entspricht.

Durch die Erfindung ist ein Fahrzeugsitz geschaffen, der bei Erhaltung der guten Federungseigenschaften der bekannten Fahrzeugsitze und Freiheit der Sitzverstellung eine verringerte Bauhöhe insofern besitzt, als die Federelemente nicht mehr über den Bereich des Polsterrahmens bezw. des mit dem Polsterrahmen gelenkig verbundenen Sitzrahmens hinausragen. Der Bereich des Sitzgestells bleibt daher völlig frei.

Die Erfindung ist in der die Konturlinien eines Fahrzeugsitzes wiedergebenden Zeichnung beispielsweise veranschaulicht.

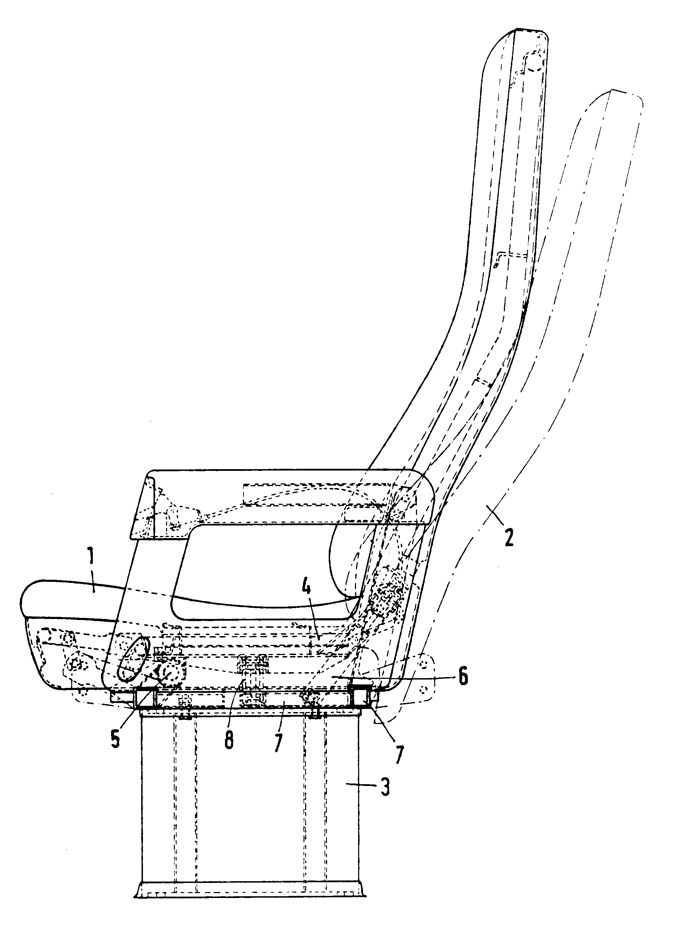

Der in der Zeichnung wiedergegebene Sitz für öffentliche Verkehrsmittel besteht aus dem gemeinsam das Sitzteil 1 und das Rückenteil 2 umfassenden, an einem Sitzgestell 3 befestigten starren Polsterrahmen 4, der um eine sich etwa in Höhe eines Drittels von der Vorderkante des Sitzteils 1 quer erstreckenden Achse 5 schwenkbar und mittels einer am Polsterrahmen 3 angreifenden Gasfeder 6 abgestützt ist. Der Polsterrahmen 4 ist an einem an dem Sitzgestell 3 befestigten Sitzrahmen 7 angelenkt, während sich die Gasfeder 6 zwischen dem Sitzrahmen 7 und dem Rückenteil 1 des Polsterrahmens 4 erstreckt, wobei mindestens eine sich zwischen der Sitzrahmen 7 und dem Polsterrahmen 4 erstreckende Druckfeder 8 vorgesehen ist, die auf den Polsterrahmen 4 bei entlasteter Gasfeder 6 eine vertikale Stützkraft ausübt, die dem Gewicht des Sitzes, zuzüglich dem durch die Personbelastung auf den Polsterrahmen ausgeübten Moment entspricht. Hierbei dient die Gasfeder in der üblichen Weise zur Feder und Sitzverstellung aus der Sitzlage in eine mehr oder weniger geneigte Liegelage, während die Druckfeder(n) der Unterstützung der Gasfeder dienen bei der Bewegung des Sitzes aus der Liegelage, in der die Gasfeder aufgrund der geringen Bauhöhe der Anordnung eine extrem horizontale Lage mit nur geringer Vertikalkraftkomponente besitzt. Die Druckfedern unterstützen aufgrund ihrer in dieser Lage extremen Vorspannung die Aufrichtbewegung des Sitzes, die bei zunehmender Aufrichtung sowohl des Sitzes als auch der Gasfeder bei gleichzeitig zunehmender Entspannung der Druckfedern von der Gasfeder übernommen wird.

**Patentansprüche**

1. Sitz für öffentliche Verkehrsmittel, bestehend aus einem gemeinsam das Sitzteil (1) und das Rückenteil (2) umfassenden, an einem Sitzgestell (3) befestigten starren Polsterrahmen (4), der um eine sich etwa in Höhe eines Drittels von der Vorderkante des Sitzteils quer erstreckenden Achse (5) schwenkbar und mittels einer am Polsterrahmen (4) angreifenden Gasfeder (6) abgestützt ist, dadurch gekennzeichnet, daß der Polsterrahmen (4) an einem an dem Sitzgestell (3) befestigten Sitzrahmen (7) angelenkt ist und sich die Gasfeder (6) zwischen dem Sitzrahmen (7) und dem Rückenteil (1) des Polsterrahmens (4) erstreckt, wobei mindestens eine sich zwischen der Sitzrahmen (7) und dem Polsterrahmen (4) erstreckende Druckfeder (8) vorgesehen ist, die auf den Polsterrahmen (4) bei entlasteter Gasfeder (6) eine vertikale Stützkraft ausübt, die dem Gewicht des Sitzes, zuzüglich dem durch die Personbelastung auf den Polsterrahmen ausgeübten Moment entspricht.

## Claims

1. Seat for a public transport vehicle, comprising a rigid upholstery frame (4) which includes both a seat portion (1) and a back portion (2) and is mounted on a seat frame (3), said upholstery frame being pivotable about an axis (5) which extends transversely substantially on a level with a third of the distance from the front edge of the seat portion to the back edge thereof and being supported by means of a gas spring (6) which cooperates with the upholstery frame (4), characterised in that the upholstery frame (4) is pivotally mounted on a seat frame (7) which is mounted on the seat frame (3) and the gas spring (6) extends between the seat frame (7) and the back portion (2) of the upholstery frame (4), at least one compression spring (8) being provided which extends between the seat frame (7) and the upholstery frame (4) and exerts a vertical supporting force upon the upholstery frame (4) when the gas spring (6) is relieved of load, said supporting force corresponding to the weight of the seat plus the moment exerted upon the upholstery frame as a result of a person's load.

## Revendications

1. Siège pour moyens de transport en commun, se composant d'un cadre rembourré rigide (4) qui comprend en commun la partie siège (1) et la partie dossier (2), est fixé à un piétement de siège (3), peut pivoter autour d'un axe (5) s'étendant transversalement à peu près au tiers à partir du bord avant de la partie siège, et est soutenu au moyen d'un ressort pneumatique (6) qui agit sur le cadre rembourré (4), caractérisé en ce que le cadre rembourré (4) est articulé sur un bâti de siège (7) fixé au piétement de siège (3), et en ce que le ressort pneumatique (6) s'étend entre le bâti de siège (7) et la partie dossier (2) du cadre rembourre (4), et il est prévu au moins un ressort de pression (8) qui s'étend entre le bâti de siège (7) et le cadre rembourré (4) et qui exerce sur le cadre rembourré (4), lorsque le ressort pneumatique (6) est déchargé, une force verticale de soutien qui correspond au poids du siège plus le moment exercé sur le cadre rembourré par la charge de l'occupant du siège.

EP 0 383 955 B1

4